# EUROPEAN PATENT APPLICATION

(11) **EP 4 793 789 A1**
(43) Date of publication of application: **19.08.2026**
(21) Application number: 23955401.7
(22) Date of filing: 10.10.2023
(51) Int. Cl.: G06F 16/24, G06F 40/20

(54) **SEARCH PROGRAM, SEARCH METHOD, AND SEARCH DEVICE**

(71) Applicant: FUJITSU LIMITED, Kawasaki-shi, Kanagawa 211-8588 (JP)
(72) Inventor: MIYAZAKI, Keisuke, Kawasaki-shi, Kanagawa 211-8588 (JP)
(74) Representative: Hoffmann Eitle
(86) International application number: PCT/JP2023/036780
(87) International publication number: WO 2025/079149

(57) **Abstract**

A retrieval device (100) divides a set of structured documents related to external knowledge into a plurality of pieces of partial data for each predetermined unit. The retrieval device (100) generates a prompt including the pieces of partial data, designated input data, and an instruction to select the partial data relevant to the input data. The retrieval device (100) inputs the prompt to a large language model, thereby acquiring a selection result of the large language model. The retrieval device (100) retrieves one piece of partial data from the pieces of partial data, based on the selection result, and outputs a retrieval result.

## Description

### Technical Field

The present invention relates to a retrieval program and the like.

### Background Art

Retrieval-augmented generation (RAG) is used as a method to improve the quality of large language model (LLM) generation results. The RAG extracts external knowledge using a retriever and explicitly adds the extracted external knowledge to the prompt to perform in-contextlearning for the LLM. It has been reported that the RAG contributes to the improvement of LLM performance and to the suppression of illusions.

The RAG maintains the external knowledge as a set of characters that can be input to the LLM. The retriever is a system to retrieve the external knowledge that is the closest to the question sentence input by a system or a user, based on the surface information of the sentence or sentence embedding.

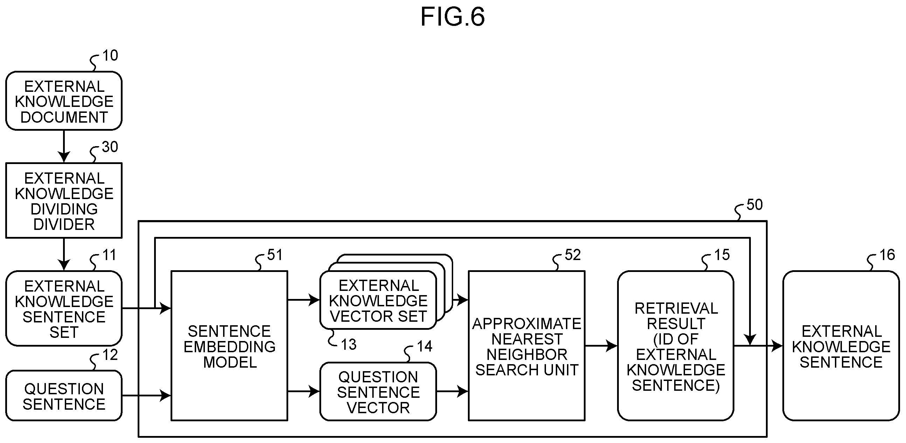

FIG. 6 is a drawing for describing a conventional retriever. As illustrated in FIG. 6, an external knowledge document 10 is input to an external knowledge divider 30 and divided into text units or sentence units with the appropriate length. In the following description, for the convenience of explanation, the external knowledge document 10 shall be divided into sentence units, and each divided sentence shall be assigned an ID.

The external knowledge document 10 divided into sentence units is input to a retriever 50 from the external knowledge divider 30 as an external knowledge sentence set 11. To the retriever 50, a question sentence 12 is input from the system or the user.

A sentence embedding model 51 of the retriever 50 acquires the external knowledge sentence set 11 and converts each sentence included in the external knowledge sentence set 11 into a vector, thereby generating an external knowledge vector set 13. The vector of each sentence is associated with the ID of the sentence as a conversion source. The retriever 50 also generates a question sentence vector 14, which results from the conversion of the question sentence 12 into the vector. The sentence embedding model 51 inputs the external knowledge vector set 13 and the question sentence vector 14 to an approximate nearest neighbor search unit 52.

The approximate nearest neighbor search unit 52 performs an approximate nearest neighbor search on the basis of the external knowledge vector set 13 and the question sentence vector 14. For example, the approximate nearest neighbor search unit 52 outputs, as a retrieval result 15, the ID of the vector of the sentence that is the closest to the question sentence vector 14 among the vectors of the sentences included in the external knowledge vector set 13. The retriever 50 acquires an external knowledge sentence 16 corresponding to the sentence ID included in the retrieval result from the external knowledge sentence set 11 and outputs the acquired external knowledge sentence 16.

As explained with reference to FIG. 6, the retriever 50 can extract the external knowledge that is close to the question sentence 12 from the external knowledge document 10 by performing the above-described process.

### Citation List

### Patent Literature

Non-Patent Literature 1: Fengbin Zhu, Wenqiang Lei, Chao Wang, Jianming Zheng, Soujanya Poria, Tat-Seng Chua "Retrieving and Reading: A Comprehensive Survey on Open-domain Question Answering," arXiv:2101.00774v3 (cs.AI), May 8, 2021
Non-Patent Literature 2: "QA using a Retriever", (online], Internet, <URL: python.langchain.com/docs/use_cases/question_answering/how_ to/vector_db_qa>, retrieved on October 11, Reiwa 5

### Summary

### Technical Problem

However, the conventional techniques described above have the problem of not being able to retrieve information suitable for a question sentence from a set of structured documents that serve as external knowledge with high accuracy.

When "a set of structured documents with the size (number of characters) that fits in the prompt" is used as the external knowledge, the following problem arises depending on the granularity at the division of the external knowledge into a set of sentences to be retrieved. As one example described here, a set of structured documents about the external knowledge is in excel file (excel document). The excel file is complexly structured sheet by sheet.

For example, if the external knowledge is divided into smaller units such as text units or the equivalent cell units or row units, the external knowledge after the division lacks the contextual information, the relevance of the sentences, and the like that were included in the structured document before the division. Therefore, the external knowledge retrieved by the retriever undermines the information needed in the answer of the LLM.

On the other hand, when the external knowledge is divided into larger units, such as table or sheet units, it is difficult to set the correct vector for information that reduces the entire table or sheet to character strings, and the retrieval accuracy of the retriever using the sentence embedding becomes lower.

In other words, the conventional techniques are not able to retrieve, with high accuracy, the information suitable for input data such as question sentences from a set of structured documents that serve as the external knowledge.

In one aspect, it is an object of the present invention to provide a retrieval program, a retrieval method, and a retrieval device that can retrieve, with high accuracy, information suitable for input data from a set of structured documents that serve as external knowledge. Solution to Problem

According to an aspect of the embodiment of the invention, a retrieval program causes a computer to perform a process including dividing a set of structured documents related to external knowledge into a plurality of pieces of partial data for each predetermined unit generating a prompt including the pieces of partial data, designated input data, and an instruction to select the partial data relevant to the input data inputting the prompt to a large language model, to acquiring a selection result of the large language model and retrieving one piece of partial data from the pieces of partial data, based on the selection result, and outputting a retrieval result. Advantageous Effects of Invention

The information suitable for the input data can be retrieved from a set of structured documents that serve as the external knowledge.

### Brief Description of Drawings

FIG. 1 is a diagram for describing a process of a retrieval device according to the present example.
FIG. 2 is a diagram illustrating one example of a retrieval prompt template.
FIG. 3 is a functional block diagram illustrating a structure of the retrieval device according to the present example.
FIG. 4 is a flowchart illustrating a processing procedure of the retrieval device according to the present example.
FIG. 5 is a diagram illustrating one example of a hardware structure of a computer that achieves functions similar to those of the retrieval device according to the example.
FIG. 6 is a diagram for describing a conventional retriever.

### Description of Embodiments

An example of a retrieval program, a retrieval method, and a retrieval device disclosed in the present application will be described below in detail based on drawings. This invention is not limited by this example.

### [Example]

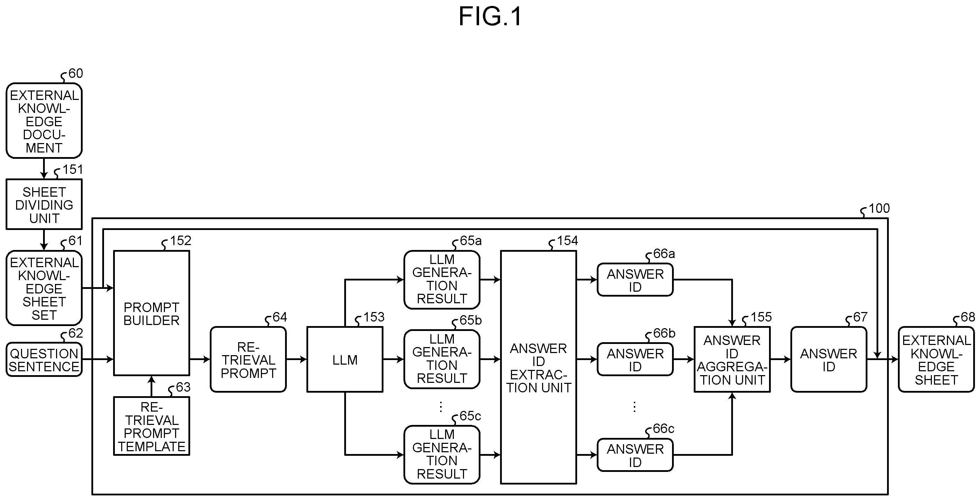

One example of a process of a retrieval device 100 according to the present example is described. FIG. 1 is a diagram for describing the process of the retrieval device according to the present example. An external knowledge document 60 in FIG. 1 is a set of structured documents such as excel files, csv files, and markdown files. In this example, the external knowledge document 60 will be described as an excel file with a plurality of sheets as one example. The size (number of characters) of the external knowledge document 60 shall be adjusted to be less than the size that fits into the pre-defined prompt.

Upon the reception of the input of the external knowledge document 60, a sheet dividing unit 151 divides the external knowledge document 60 for each sheet. In the following description, the data in the external knowledge document 60 that is divided for each sheet will be referred to as "sheet data". The sheet data is one example of partial data.

The sheet dividing unit 151 generates an external knowledge sheet set 61 including a plurality of pieces of sheet data. The sheet dividing unit 151 assigns IDs to the pieces of sheet data included in the external knowledge sheet set 61. The sheet dividing unit 151 inputs the external knowledge sheet set 61 to the retrieval device 100.

The retrieval device 100 includes a prompt builder 152, an LLM 153, an answer ID extraction unit 154, and an answer ID aggregation unit 155. Note that the retrieval device 100 may include the sheet dividing unit 151 described above. The retrieval device 100 is a retriever or the like.

Upon the reception of the input of the external knowledge sheet set 61 and a question sentence 62, the prompt builder 152 generates a retrieval prompt 64 on the basis of a retrieval prompt template 63. For example, the question sentence 62 is a query designated by a system or a user, such as "please tell me the amount of apples produced in Aomori Prefecture".

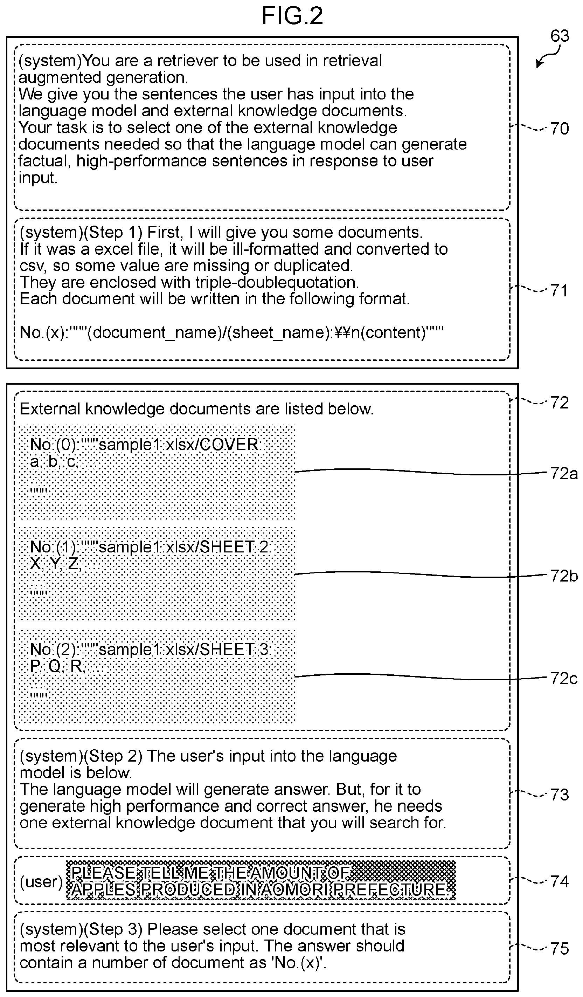

FIG. 2 is a diagram illustrating one example of the retrieval prompt template. As illustrated in FIG. 2, the retrieval prompt template includes areas 70, 71, 72, 73, 74, and 75.

The area 70 is an area where the role is presented to the LLM 153. For example, in the area 70, the following character string is set in advance: "(system) You are a retriever to be used in retrieval augmented generation. We give you the sentences the user has input into the language model and external knowledge documents. Your task is to select one of the external knowledge documents needed so that the language model can generate factual, high-performance sentences in response to user input." For example, in the area 70, it is instructed by the character string that the role of the retriever is given and the sentences designated by the user and the external knowledge are given to the LLM 153.

The area 71 is an area where preliminary knowledge of the external knowledge document 60 is presented to the LLM 153. For example, in the area 71, the following character string is set in advance: "(system) (Step 1) First, I will give you some documents. If it was a excel file, it will be ill-formatted and converted to csv, so some value are missing or duplicated. They are enclosed with triple-doublequotation. Each document will be written in the following format.

No.(x): " " " (document_name) / (sheet_name) :\\n(content)" " " " For example, in the area 71, it is instructed that a plurality of the external knowledge documents (pieces of sheet data) are given to the LLM 153, each piece of sheet data is enclosed with """, each piece of sheet data is assigned the ID "No. (x)", and so on.

The area 72 is an area where each piece of sheet data is set. In the example illustrated in FIG. 2, areas 72a, 72b, and 73c are included as areas where the pieces of sheet data are set. For example, the prompt builder 152 sets the sheet data that is included in the external knowledge sheet set 61 and that has the ID "0", in the area 72a. The prompt builder 152 sets the sheet data that is included in the external knowledge sheet set 61 and that has the ID "1", in the area 72b. The prompt builder 152 sets the sheet data that is included in the external knowledge sheet set 61 and that has the ID "2", in the area 72c.

The example illustrated in FIG. 2 includes only the areas 72a to 73c; however, the present invention is not limited to this example and other areas where the sheet data is set may be included. The prompt builder 152 performs the similar process for the other sheet data included in the external knowledge sheet set 61. When each piece of sheet data is set in the area, the prompt builder 152 shall follow the format described in the area 71.

The area 73 is an area where the preliminary knowledge of the query is presented to the LLM 153. For example, in the area 73, the following character string is set in advance: "(system) (Step 2) The user's input into the language model is below. The language model will generate answer. But, for it to generate high performance and correct answer, he needs one external knowledge document that you will search for." For example, in the area 73, it is instructed to the LLM 153 that the sentence (question sentence) designated by the system or the user is set in the area 74, and so on.

The area 74 is an area where the query is presented to the LLM 153. For example, if the question sentence 62 is "please tell me the amount of apples produced in Aomori Prefecture", the prompt builder 152 will set "please tell me the amount of apples produced in Aomori Prefecture" in the area 74.

The area 75 is an area where the instruction to the LLM 153 is given. For example, in the area 75, the following character string is set in advance: "(system) (Step 3) Please select one document that is most relevant to the user's input. The answer contains a number of document as 'No. (x)'." In the area 75, it is instructed to the LLM 153 that the ID of the sheet data that is the most similar to the query set in the area 74 among the pieces of sheet data set in the area 72 is output.

As described above, upon the reception of the input of the external knowledge sheet set 61 and the question sentence 62, the prompt builder 152 sets each piece of information in the retrieval prompt template 63, thereby generating the retrieval prompt 64. For example, the prompt builder 152 sets each piece of sheet data included in the external knowledge sheet set 61 in the area 72 (areas 72a to 72c) of the retrieval prompt template 63 according to a predetermined format. The prompt builder 152 also sets the character string of the question sentence 62 in the area 74. The prompt builder 152 inputs the generated retrieval prompt 64 a plurality of times to the LLM 153.

The retrieval prompt template 63 described with reference to FIG. 2 is a template created on the assumption that Chat Generative Pretrained Transformer (ChatGPT) is used as the LLM. Here, when the LLM other than ChatGPT is used as the LLM, information equivalent to that in the areas 70 to 76 described with reference to FIG. 2 may be set according to the corresponding LLM.

The LLM 153 is a model of natural language processing that has been trained using a large amount of text data and adapted to a variety of natural language processing (NLP) tasks. The LLM 153 is BERT, ChatGPT, or the like. The temperature parameter of the LLM 153 can have a value between 0 and 1; in this example, the temperature parameter of the LLM 153 is "0.5 or more (preferably, 0.7 or more)".

For example, the LLM 153 outputs the LLM generation result when the retrieval prompt 64 is input. For the LLM generation result, the ID of the sheet data that is the most similar to the query set in the area 74 among the pieces of sheet data set in the area 72 is set. When the retrieval prompt 64 is input N times, the LLM 153 outputs N LLM generation results. In the example illustrated in FIG. 1, the LLM 153 outputs LLM generation results 65a, 65b, and 65c to the answer ID extraction unit 154. The LLM generation result is one example of a selection result.

The answer ID extraction unit 154 extracts the ID of the sheet data included in the LLM generation results as an "answer ID". The answer ID extraction unit 154 compares a predetermined regular expression "No.\((1-9) (0-9)*\)" with the LLM generation result, and uses the value of the first matching point as the answer ID. For example, if the LLM generation result is "No. (2)", the answer ID is "2". If the LLM generation result is "No. (3) and No. (5)", the answer ID is "3".

In the example illustrated in FIG. 1, the answer ID extraction unit 154 generates an answer ID 66a from the LLM generation result 65a. The answer ID extraction unit 154 generates an answer ID 66b from the LLM generation result 65b. The answer ID extraction unit 154 generates an answer ID 66c from the LLM generation result 65c. The answer ID extraction unit 154 outputs the answer IDs 66a to 66c to the answer ID aggregation unit 155.

As described with reference to FIG. 2, the retrieval prompt template 63 is defined in advance to output in the format that can extract the answer ID using the regular expression described above.

The answer ID aggregation unit 155 aggregates the answer IDs into a single answer ID 67. For example, the answer ID aggregation unit 155 generates the final answer ID by majority voting for the answer IDs. For example, if the answer ID aggregation unit 155 acquires the answer IDs 66a to 66c and the respective values are "2, 6, 6", the value of the final answer ID 67 is "6". If there are two or more mode values, the answer ID aggregation unit 155 randomly selects one value from the mode values to be the final answer ID 67.

The answer ID aggregation unit 155 outputs the aggregated answer ID 67. The retrieval device 100 retrieves the sheet data corresponding to the answer ID 67 from the external knowledge sheet set 61. The retrieval device 100 outputs a retrieved external knowledge sheet 68. The answer ID aggregation unit 155 in this example shall aggregate five answer IDs at maximum into a single answer ID.

The retrieval device 100 retrieves the sheet data corresponding to the answer ID 67 from the external knowledge sheet set 61, and outputs the sheet data corresponding to the retrieval result as the external knowledge sheet 68.

As described above, the retrieval device 100 generates the external knowledge sheet set 61 by dividing the external knowledge document 60 into sheet units, and generates the retrieval prompt 64 on the basis of the external knowledge sheet set 61, the question sentence 62, and the retrieval prompt template 63. In the retrieval prompt 64, an instruction to cause the LLM 153 to select the sheet data that is similar to the question sentence from the pieces of sheet data included in the external knowledge sheet set 61 is set. The retrieval device 100 inputs the retrieval prompt 64 to the LLM 153, retrieves the sheet data from the external knowledge document 60 on the basis of the LLM generation results output from the LLM 153, and outputs the retrieval results. Thus, the information suitable for the input data such as question sentences can be retrieved with high accuracy from a set of structured documents that serve as the external knowledge.

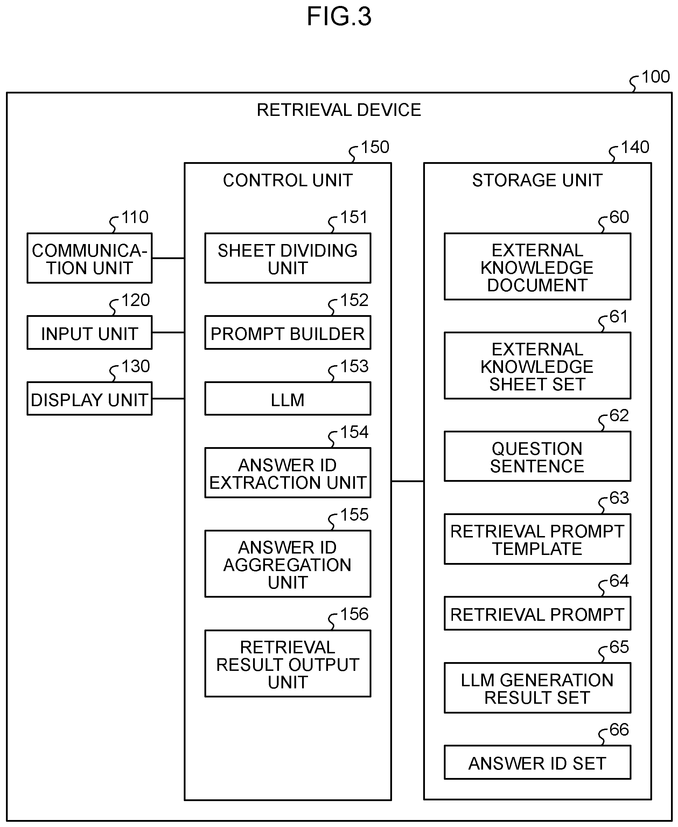

Next, a structure example of the retrieval device 100 that performs the aforementioned process is described. FIG. 3 is a functional block diagram illustrating a structure of the retrieval device according to the present example. As illustrated in FIG. 3, this retrieval device 100 includes a communication unit 110, an input unit 120, a display unit 130, a storage unit 140, and a control unit 150.

The communication unit 110 performs data communication with an external device or the like via a network. The communication unit 110 is a network interface card (NIC) or the like. For example, the retrieval device 100 may acquire the external knowledge document 60 or the like from the external device.

The input unit 120 is an input device that inputs various kinds of information to the control unit 150 of the retrieval device 100. For example, the input unit 120 corresponds to a keyboard, a mouse, a touch panel, or the like. The user may operate the input unit 120 to input the question sentence 62.

The display unit 130 is a display device that displays information output from the control unit 150.

The storage unit 140 includes the external knowledge document 60, the external knowledge sheet set 61, the question sentence 62, the retrieval prompt template 63, the retrieval prompt 64, an LLM generation result set 65, and an answer ID set 66. The storage unit 140 is a memory or the like.

The external knowledge document 60 is a set of structured documents such as excel files, csv files, or markdown files. The other description about the external knowledge document 60 is similar to the description of the external knowledge document 60 described with reference to FIG. 1.

The external knowledge sheet set 61 is generated by the sheet dividing unit 151 as described with reference to FIG. 1. For the external knowledge sheet set 61, the divided pieces of sheet data and the ID that identifies each piece of sheet data are set.

The excel file is converted to the csv format for each sheet, which is treated as one unit of the external knowledge (one piece of sheet data). At the csv conversion, a line break in a cell is converted to the "\n" character string. At the csv conversion, a space is input after the comma in csv. When the external knowledge document 60 is a Markdown file, one file is treated as one unit of the external knowledge (equivalent to sheet data).

The question sentence 62 is a question sentence (character string) designated by the system or the user operating the input unit 120.

The retrieval prompt template 63 is a template used to generate the retrieval prompt 64. The other description about the retrieval prompt template 63 is similar to the description given with reference to FIG. 2.

The retrieval prompt 64 is a prompt generated by the prompt builder 152. The other description about the retrieval prompt 64 is similar to that given above.

The LLM generation result set 65 has the LLM generation results output from the LLM 153. The LLM generation results output from the LLM 153 are the LLM generation results 65a, 65b, 65c, and the like illustrated in FIG. 1.

The answer ID set 66 includes the answer IDs output from the answer ID extraction unit 154. The answer IDs output from the answer ID extraction unit 154 are the answer IDs 66a, 66b, and 66c illustrated in FIG. 1.

Next, the control unit 150 is described. The control unit 150 includes the sheet dividing unit 151, the prompt builder 152, the LLM 153, the answer ID extraction unit 154, the answer ID aggregation unit 155, and a retrieval result output unit 156. The control unit 150 is a central processing unit (CPU), a graphics processing unit (GPU), or the like.

The sheet dividing unit 151 acquires the external knowledge document 60 and divides the external knowledge document 60 for each sheet to generate the external knowledge sheet set 61. The sheet dividing unit 151 assigns an ID to each piece of the divided sheet data. The other description about the sheet dividing unit 151 is similar to the description of the sheet dividing unit 151 described with reference to FIG. 1. In the example described with reference to FIG. 3, the control unit 150 includes the sheet dividing unit 151; however, another external device may include the function of the sheet dividing unit 151. In this case, the retrieval device 100 acquires the external knowledge sheet set 61 from the external device.

The prompt builder 152 acquires the external knowledge sheet set 61 and the question sentence 62 and generates the retrieval prompt 64 on the basis of the retrieval prompt template 63. For example, the prompt builder 152 sets each piece of sheet data included in the external knowledge sheet set 61 in the area 72 (areas 72a to 72c) of the retrieval prompt template 63 according to a predetermined format. The prompt builder 152 also sets the character string of the question sentence 62 in the area 74.

The prompt builder 152 inputs the generated retrieval prompt 64 a plurality of times to the LLM 153.

The LLM 153 is a model of natural language processing that has been trained using a large amount of text data and adapted to a variety of natural language processing tasks. The LLM 153 is BERT, ChatGPT, or the like. For example, the LLM 153 is given the role of the retriever by the retrieval prompt 64, and outputs the ID of the sheet data that is the most similar to the question sentence among the sheet data included in the retrieval prompt 64, as the LLM generation result. When the retrieval prompt 64 is input N times, the LLM 153 outputs N LLM generation results. The other description about the LLM 153 is similar to the description about the LLM 153 described with reference to FIG. 1. The N LLM generation results are registered to the LLM generation result set 65.

The answer ID extraction unit 154 extracts the ID of the sheet data included in the LLM generation results included in the LLM generation result set 65 as the "answer ID". The extracted answer IDs are registered to the answer ID set 66. The other description about the answer ID extraction unit 154 is similar to the description about the answer ID extraction unit 154 described with reference to FIG. 1.

The answer ID aggregation unit 155 aggregates the answer IDs included in the answer ID set 66 into a single answer ID. The answer ID aggregation unit 155 outputs the aggregated answer ID to the retrieval result output unit 156. The other description about the answer ID aggregation unit 155 is similar to the description about the answer ID aggregation unit 155 described with reference to FIG. 1.

The retrieval result output unit 156 compares the answer ID acquired from the answer ID aggregation unit 155 with the ID of each piece of sheet data included in the external knowledge sheet set 61 to retrieve the sheet data with the same ID as the answer ID. The retrieval result output unit 156 outputs the sheet data corresponding to the retrieval result to the external device that performs the function of the RAG.

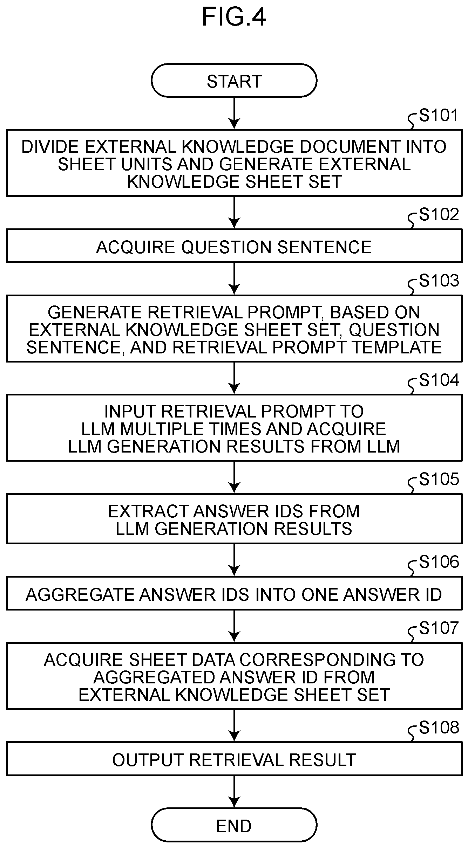

Next, one example of a processing procedure of the retrieval device 100 according to the present example is described. FIG. 4 is a flowchart illustrating the processing procedure of the retrieval device according to the present example. As illustrated in FIG. 4, the sheet dividing unit 151 of the retrieval device 100 divides the external knowledge document 60 into sheet units to generate the external knowledge sheet set 61 (step S101).

The prompt builder 152 of the retrieval device 100 acquires the question sentence 62 from the input unit 120 or the storage unit 140 (step S102). The prompt builder 152 generates the retrieval prompt 64 on the basis of the external knowledge sheet set 61, the question sentence 62, and the retrieval prompt template 63 (step S103).

The prompt builder 152 inputs the retrieval prompt 64 a plurality of times to the LLM 153 and acquires the LLM generation results from the LLM 153 (step S104). The answer ID extraction unit 154 of the retrieval device 100 extracts the answer IDs from the LLM generation results (step S105).

The answer ID aggregation unit 155 of the retrieval device 100 aggregates the answer IDs into a single answer ID (step S106). The retrieval result output unit 156 of the retrieval device 100 acquires the sheet data corresponding to the aggregated answer ID from the external knowledge sheet set 61 (step S107). The retrieval result output unit 156 outputs the acquired sheet data as the retrieval result (step S108).

Next, the effect of the retrieval device 100 according to the present example will be described. The retrieval device 100 generates the external knowledge sheet set 61 by dividing the external knowledge document 60 into sheet units, and generates the retrieval prompt 64 on the basis of the external knowledge sheet set 61, the question sentence 62, and the retrieval prompt template 63. In the retrieval prompt 64, an instruction to cause the LLM 153 to select the sheet data that is similar to the question sentence from the pieces of sheet data included in the external knowledge sheet set 61 is set. The retrieval device 100 inputs the retrieval prompt 64 to the LLM 153, retrieves the sheet data from the external knowledge document 60 on the basis of the LLM generation results output from the LLM 153, and outputs the retrieval results. Thus, the information suitable for the input data such as question sentences can be retrieved with high accuracy from a set of structured documents that serve as the external knowledge.

In addition, the information suitable for the input data such as the question sentence can be retrieved from a set of structured documents that serve as the external knowledge with high accuracy; therefore, it is expected to improve the response performance and reduce illusions in the RAG system that utilizes the retriever.

The retrieval device 100 divides the external knowledge document 60 into the pieces of sheet data and assigns the IDs to the divided sheet data, thereby generating the external knowledge sheet set 61. The retrieval device 100 sets in the retrieval prompt 64 an instruction to output the ID of the sheet data that is the most relevant to the question sentence 62 among the pieces of sheet data. Thus, the ID of the sheet data that is the most relevant to the question sentence 62 can be specified using the LLM 153.

The retrieval device 100 acquires the LLM generation results by inputting the retrieval prompt 64 a plurality of times to the LLM 153. The retrieval device 100 specifies the final answer ID by the majority voting for the answer IDs corresponding to the respective LLM generation results, and outputs the sheet data corresponding to the specified answer ID as the retrieval result. Thus, the sheet data relevant to the question sentence can be retrieved more accurately.

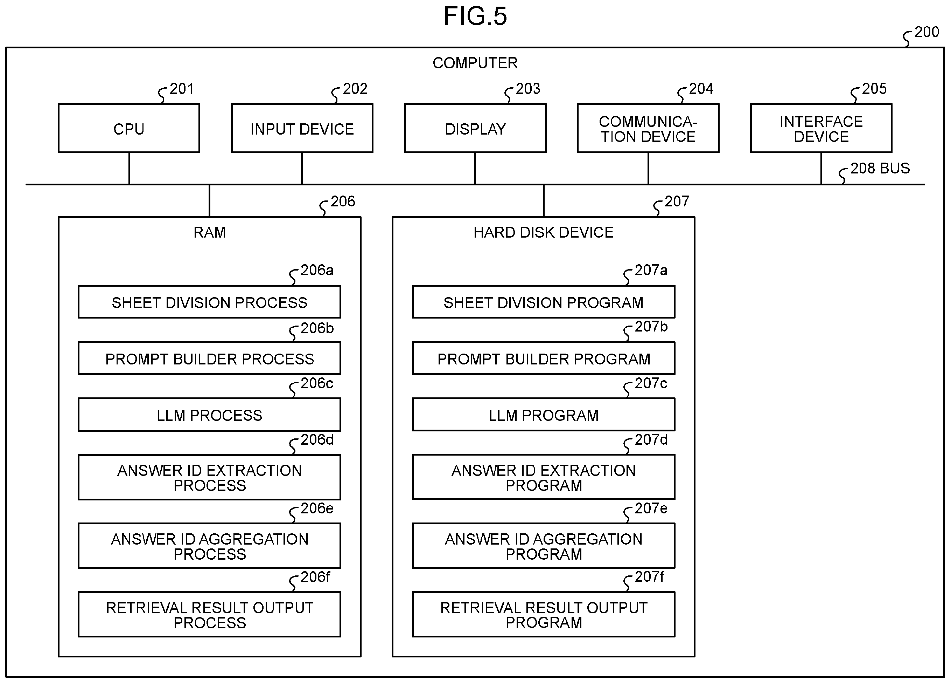

Next, one example of a hardware structure of a computer that achieves the functions similar to those of the aforementioned retrieval device 100 is described. FIG. 5 is a diagram illustrating one example of the hardware structure of the computer that achieves the functions similar to those of the retrieval device according to the example.

As illustrated in FIG. 5, a computer 200 includes a CPU 201 that performs various arithmetic processes, an input device 202 that receives data input from the user, and a display 203. The computer 200 also includes a communication device 204 that transmits and receives data to and from the external device or the like via a wired or wireless network, and an interface device 205. The computer 200 also includes a RAM 206 for temporarily storing various kinds of information and a hard disk device 207. Each of the devices 201 to 207 is connected to a bus 208.

The hard disk device 207 includes a sheet division program 207a, a prompt builder program 207b, an LLM program 207c, an answer ID extraction program 207d, an answer ID aggregation program 207e, and a retrieval result output program 207f. The CPU 201 reads out each of the computer programs 207a to 207f and develops the computer program in the RAM 206.

The sheet division program 207a functions as a sheet division process 206a. The prompt builder program 207b functions as a prompt builder process 206b. The LLM program 207c functions as an LLM process 206c. The answer ID extraction program 207d functions as an answer ID extraction process 206d. The answer ID aggregation program 207e functions as an answer ID aggregation process 206e. The retrieval result output program 207f functions as a retrieval result output process 206f.

The process of the sheet division process 206a corresponds to the process of the sheet dividing unit 151. The process of the prompt builder process 206b corresponds to the process of the prompt builder 152. The process of the LLM process 206c corresponds to the process of the LLM 153. The process of the answer ID extraction process 206d corresponds to the process of the answer ID extraction unit 154. The process of the answer ID aggregation process 206e corresponds to the process of the answer ID aggregation unit 155. The process of the retrieval result output process 206f corresponds to the process of the retrieval result output unit 156.

Each of the computer programs 207a to 207f does not have to be stored in the hard disk device 207 from the beginning. For example, each computer program is stored in advance in a "portable physical medium" such as a flexible disk (FD), a CD-ROM, a DVD, a magneto-optical disk, or an IC card that is inserted into the computer 200. The computer 200 may read out and execute each of the computer programs 207a to 207f.

### Reference Signs List

- 60: EXTERNAL KNOWLEDGE DOCUMENT
- 61: EXTERNAL KNOWLEDGE SHEET SET
- 62: QUESTION SENTENCE
- 63: RETRIEVAL PROMPT TEMPLATE
- 64: RETRIEVAL PROMPT
- 65: LLM GENERATION RESULT SET
- 66: ANSWER ID SET
- 100: RETRIEVAL DEVICE
- 110: COMMUNICATION UNIT
- 120: INPUT UNIT
- 130: DISPLAY UNIT
- 140: STORAGE UNIT
- 150: CONTROL UNIT
- 151: SHEET DIVIDING UNIT
- 152: PROMPT BUILDER
- 153: LLM
- 154: ANSWER ID EXTRACTION UNIT
- 155: ANSWER ID AGGREGATION UNIT
- 156: RETRIEVAL RESULT OUTPUT UNIT

## Claims

1. A retrieval program causing a computer to perform a process comprising:
dividing a set of structured documents related to external knowledge into a plurality of pieces of partial data for each predetermined unit;
generating a prompt including the pieces of partial data, designated input data, and an instruction to select the partial data relevant to the input data;
inputting the prompt to a large language model, thereby acquiring a selection result of the large language model; and
retrieving one piece of partial data from the pieces of partial data, based on the selection result, and outputting a retrieval result.

2. The retrieval program according to claim 1, causing the computer to perform the process further comprising assigning identification information to the respective pieces of partial data, wherein, in the generating of the prompt, an instruction to select the identification information of the partial data that is the most relevant to the input data from the pieces of partial data is set in the prompt.

3. The retrieval program according to claim **2,** wherein, in the acquiring of the selection result, the prompt is input to the large language model a plurality of times so that a plurality of the selection results are acquired from the large language model.

4. The retrieval program according to claim **3,** wherein, in the retrieving, the identification information included in the selection results is totaled, one piece of partial data corresponding to a maximum number of identification information is retrieved from the pieces of partial data, and the retrieved one piece of partial data is output.

5. A retrieval method causing a computer to perform a process comprising:
dividing a set of structured documents related to external knowledge into a plurality of pieces of partial data for each predetermined unit;
generating a prompt including the pieces of partial data, designated input data, and an instruction to select the partial data relevant to the input data;
inputting the prompt to a large language model, thereby acquiring a selection result of the large language model; and
retrieving one piece of partial data from the pieces of partial data, based on the selection result, and outputting a retrieval result.

6. The retrieval method according to claim 5, causing the computer to perform the process further comprising assigning identification information to the respective pieces of partial data, wherein, in the generating of the prompt, an instruction to select the identification information of the partial data that is the most relevant to the input data from the pieces of partial data is set in the prompt.

7. The retrieval method according to claim 6, wherein, in the acquiring of the selection result, the prompt is input to the large language model a plurality of times so that a plurality of the selection results are acquired from the large language model.

8. The retrieval method according to claim 7, wherein, in the retrieving, the identification information included in the selection results is totaled, one piece of partial data corresponding to a maximum number of identification information is retrieved from the pieces of partial data, and the retrieved one piece of partial data is output.

9. A retrieval device comprising a control unit that performs a process including:
dividing a set of structured documents related to external knowledge into a plurality of pieces of partial data for each predetermined unit;
generating a prompt including the pieces of partial data, designated input data, and an instruction to select the partial data relevant to the input data;
inputting the prompt to a large language model, thereby acquiring a selection result of the large language model; and
retrieving one piece of partial data from the pieces of partial data, based on the selection result, and outputting a retrieval result.

10. The retrieval device according to claim **9,** wherein the control unit performs the process further including assigning identification information to the respective pieces of partial data, wherein, in the generating of the prompt, an instruction to select the identification information of the partial data that is the most relevant to the input data from the pieces of partial data is set in the prompt.

11. The retrieval device according to claim 10, wherein, in the acquiring of the selection result, the prompt is input to the large language model a plurality of times so that a plurality of the selection results are acquired from the large language model.

12. The retrieval device according to claim 11, wherein, in the retrieving, the identification information included in the selection results is totaled, one piece of partial data corresponding to a maximum number of identification information is retrieved from the pieces of partial data, and the retrieved one piece of partial data is output.
